# EUROPÄISCHE PATENTANMELDUNG

(11) **EP 4 190 471 A1**
(43) Veröffentlichungstag der Anmeldung: **07.06.2023**
(21) Anmeldenummer: 21212620.5
(22) Anmeldetag: 06.12.2021
(51) Int. Cl.: B23B 31/177, B23B 31/16, B23B 31/30

(54) **AUSGLEICHSSPANNFUTTER ZUM ZENTRISCHEN EINSTELLEN VON WERKSTÜCKEN, UND WERKZEUGMASCHINE MIT SELBIGEM**

(71) Anmelder: HVM Technology GmbH, 28876 Oyten (DE)
(72) Erfinder:
(74) Vertreter: Eisenführ Speiser

(57) **Zusammenfassung**

Ausgleichsspannfutter (1) zum zentrischen Einspannen von Werkstücken, mit einem Gehäuse (3), zwei Paaren von einander diametral gegenüberliegenden, in dem Gehäuse (3) geführten Grundbacken (5a,5c; 5b,5d), und einer in das Gehäuse (3) integrierten Antriebseinheit (10), die zum zentrischen Spannen der Grundbacken (5a,5c; 5b,5d) eingerichtet ist. Es wird vorgeschlagen, dass die Antriebseinheit (10) dazu eingerichtet ist, die Grundbacken (5a,5c; 5b,5d) hydraulisch zu betätigen.

## Beschreibung

Die Erfindung betrifft ein Ausgleichsspannfutter zum zentrischen Einspannen von Werkstücken, insbesondere zur Verwendung an einer Werkzeugmaschine, wobei das Ausgleichsspannfutter ein Gehäuse, zwei Paar voneinander diametral gegenüberliegenden, in dem Gehäuse geführten Grundbacken, und eine in das Gehäuse integrierte Antriebseinheit aufweist, die zum zentrischen Spannen der Grundbacken eingerichtet ist.

Ausgleichsspannfutter der vorstehend bezeichneten Art sind allgemein bekannt. Beispielsweise offenbaren die DE 102013201231 B1, EP 268156 B1, EP 3028794 B, EP 345066 A1 und EP 3632598 A1 jeweils Ausgleichsspannfutter, mit denen sowohl rotationssymmetrische als auch unsymmetrische Werkstücke unter Wahrung der Zentrizität beim Spannen von zwei Paaren Grundbacken eingespannt und zuverlässig gehalten werden können. Es sind aus dem vorstehenden Schriften unterschiedliche Antriebskonzepte solcher Ausgleichsspannfutter bekannt. Bislang wurde unterschieden zwischen Spannfuttern mit Handspannung und Spannfuttern mit Kraftspannung. Spannfutter mit Handspannung werden manuell über das Aufbringen eines Schraubmoments auf eine im Gehäuse angeordnete Antriebsspindel gespannt, wobei zum Anlegen einer ausreichenden Spannkraft meist die Verwendung von Mitteln zur Drehmomentkontrolle notwendig ist. Als Kraftspannfutter werden typischerweise solche Spannfutter verstanden, die keinen eigenen Antrieb im eigentlichen Sinne aufweisen, sondern lediglich Mittel zur Kraftübertragung von einem externen Antrieb einer Werkzeugmaschine, beispielsweise einem Zugrohr oder einer Zugstange, auf die innere Mechanik des Futters und damit auf die Spannbacken aufweisen, und welche zunächst an den externen Antrieb angeschlossen werden müssen, um dann die von der Werkzeugmaschine erzeugte Antriebskraft, meist die Zugbewegung eines Spannkolbens, in eine Bewegung der Grundbacken zum zentrischen Spannen umzusetzen.

Beide Antriebskonzepte haben jeweils spezifische Anwendungsbereiche und unterscheiden sich in ihren technischen Leistungsparametern.

Handspannfutter können für sich den Vorteil beanspruchen, dass sie vergleichsweise einfach zu handhaben sind und auch unabhängig von Antriebsmitteln auf Seiten der Werkzeugmaschine gespannt und entspannt werden können. Sie sind zudem vergleichsweise portabel. Ausgleichsfutter mit Kraftspannung können für sich den Vorteil verzeichnen, dass der Spannvorgang in der Regel schneller durchgeführt werden kann, sie sind aufgrund ihrer festen Anbindung an Werkzeugmaschinen aber weniger portabel.

Ungeachtet der Tatsache, dass beide Antriebskonzepte für sich gesehen mittlerweile eine hohe Funktionsreife aufweisen, bestand doch ein Wunsch nach einer weiteren Verbesserung der Bedienbarkeit und Effizienz in Bereich der ausgleichenden, zentrischen Spannfutter.

Demzufolge lag der Erfindung die Aufgabe zugrunde, ein Ausgleichsspannfutter der eingangs bezeichneten Art anzugeben, das die vorstehend beschriebenen Nachteile möglichst weitgehend überwindet. Insbesondere lag der Erfindung die Aufgabe zugrunde, ein Spannfutter anzugeben, dass eine verbesserte Arbeitseffizienz beim Spannen aufweist, zugleich aber möglichst leicht und portabel ausgeführt werden kann.

Die Erfindung löst die ihr zugrundeliegende Aufgabe, indem die in das Gehäuse integrierte Antriebseinheit dazu eingerichtet ist, die Grundbacken des Ausgleichsspannfutters hydraulisch zu betätigen.

Die Erfindung macht sich die Erkenntnis zunutze, dass ein hydraulisches Antriebskonzept sich sehr flexibel in das Gehäuse des Spannfutters integrieren lässt, weil der im Gehäuse vorhandene Raum mittels geschickten Anordnens entsprechender Strömungspfade gut ausgenutzt werden kann. Die Erfinder haben zudem erkannt, dass mittels eines in das Gehäuse integrierten hydraulischen Antriebs mindestens vergleichbare, wenn nicht gar höhere Spannkräfte als bei konventionellen Handspannfuttern erreichbar sind, das Gehäuse des Ausgleichsspannfutters aber dennoch insgesamt kleiner und deutlich leichter ausgeführt werden kann als bei konventionellen Handspannfuttern. Die Anzahl der für den Spannvorgang benötigten beweglichen Teile - und bewegten Massen - kann reduziert werden, und die Fliehkrafteinwirkungen können dadurch reduziert werden. Die Spannvorgänge können bei einem integrierten hydraulischen Antriebskonzept ohne Verwendung von Drehmomentschlüsseln oder anderen händischen Rüstmitteln ausgeführt werden. Es muss lediglich mittels einer Druckquelle eine gewünschte Spannkraft vorgegeben werden, und über entsprechende Kalibration kann dann mittels elektronischer Steuergeräte der Druck zum Spannen geregelt werden. All diese Aspekte erhöhen die Effizienz des Ausgleichsspannfutters gegenüber den bekannten Spannfuttern mit Handspannung deutlich, ohne die Portabilität des Spannfutters einzuschränken, im Gegenteil: Es sind dieselben Spannkräfte erzielbar, bei deutlich leichterem und damit portableren Gehäusen als im Vergleich zu konventionellen Spannfuttern mit Handspannung.

Ein Hauptvorteil der Erfindung liegt in der nun geschaffenen Möglichkeit, das erfindungsgemäße Ausgleichsspannfutter auf Fräs- oder Fräsdrehmaschinen zu montieren, die für die Montage konventioneller Ausgleichsspannfutter mit Kraftspannung keinen ausreichenden Baumraum vorsehen. In der Regel erlauben diese Maschinen lediglich die Montage von Handspannfuttern. Diese Einschränkung traf bis zum Zeitpunkt der Erfindung auf die überwiegende Mehrheit der Fräs- und Fräsdrehmaschinen zu.

Das erfindungsgemäße Spannfutter ist grundsätzlich zum zentrischen Spannen ausgelegt und geeignet, es wäre aber auch möglich, beispielsweise unter Verwendung von Festanschlägen anstelle von an den Grundbacken montierten Spannbacken, nichtzentrisch zu spannen.

Dadurch, dass der hydraulische Antrieb in das Gehäuse des Spannfutters integriert ist, ist das Spannfutter zudem unabhängig von etwaigen externen Antriebssystemen der Werkzeugmaschine, es kann also im Prinzip auf jedem beliebigen Maschinentisch einer beliebigen Werkzeugmaschine installiert werden, solange die Möglichkeit besteht, in der Nähe eine hydraulische Druckversorgung vorzusehen.

In einer bevorzugten Weiterbildung weist die Antriebseinheit eine Anzahl hydraulisch betätigter Kolben auf, die mit den Grundbacken wirkverbunden sind, und die Antriebseinheit ist dazu eingerichtet, die Anzahl der Kolben mittels Druckbeaufschlagung zu betätigen, und die Kolbenbewegung in eine ausgleichende, zentrische Bewegung der Grundbackenpaare umzusetzen.

Unter einer Anzahl von Kolben werden erfindungsgemäß ein oder mehrere Kolben verstanden, beispielsweise zwei, vier, sechs oder acht Kolben.

Unter einer zentrischen Bewegung wird erfindungsgemäß verstanden, dass sich die Backen eines jeweiligen Grundbackenpaars immer auf ein gemeinsames Zentrum hin zu bewegen und von dort wegbewegen, also bei einem vollständigen Zuspannen immer im selben Zentrum aufeinandertreffen. Werden alle Grundbackenpaare bewegt, treffen sie sich immer im selben Zentrum. Ausgleichsbewegungen sind aus kinematischer Sicht vielfältig bekannt. Die Ausgleichskinematik kann erfindungsgemäß beispielsweise so gestaltet sein wie in den eingangs bezeichneten Druckschriften, oder wie in den nachfolgend beschriebenen bevorzugten Ausführungsformen.

In einer bevorzugten Ausführungsform weist der bzw. weisen die Kolben jeweils eine zuspannseitige, hydraulisch mit Druck beaufschlagbare Kolbenfläche auf, wobei die zuspannseitigen Kolbenflächen aller Kolben fluidleitend miteinander verbunden sind. Das vor allem bei Verwendung mehrerer Kolben den Effekt, dass beim Aufbringen eines hydraulischen Drucks auf der Zuspannseite alle zuspannseitigen Kolbenflächen mit demselben Druck beaufschlagt werden.

In einer weiteren bevorzugten Ausführungsform weist der bzw. weisen die Kolben jeweils eine aufspannseitige, hydraulisch mit Druck beaufschlagbare Kolbenfläche auf, wobei bei Verwendung mehrerer Kolben die aufspannseitigen Kolbenflächen aller Kolben fluidleitend miteinander verbunden sind. Das Ausgleichsspannfutter ist vorzugsweise dazu eingerichtet, hydraulisch sowohl eine Zuspannbewegung der Grundbacken auszulösen wie auch eine Aufspannbewegung, bei der sich die Grundbacken also radial nach Außen bewegen. Auch beim Aufspannvorgang ist es vorteilhaft, dass der oder die Kolben mit demselben Druck beaufschlagt werden.

In einerweiteren bevorzugten Ausführungsform weist die Antriebseinheit eine hydraulische Schnittstelle zum Koppeln der Antriebseinheit mit einer Hydraulikfluid-Versorgung auf, wobei die Schnittstelle vorzugsweise einen ersten Anschluss aufweist, von dem aus sich ein zuspannseitiger hydraulischer Strömungspfad bis zu den zuspannseitigen Kolbenflächen erstreckt. Weiter vorzugsweise weist die Schnittstelle einen zweiten Anschluss auf, von dem aus sich ein aufspannseitiger hydraulischer Strömungspfad bis zu den aufspannseitigen Kolbenflächen erstreckt. Neben diesen Strömungspfaden kann das Ausgleichspannfutter einen oder mehrere weitere Strömungspfade aufweisen, beispielsweise zum Ansteuern von Fluidsteuerorganen, zum Be- oder Entlüften oder zum Versorgen von weiteren Aktuatoren mit Hydraulikfluid. Das Ausgleichspannfutter kann neben hydraulischen Strömungspfaden auch pneumatische Strömungspfade aufweisen, beispielsweise zur vorstehend beschriebenen Entlüftung.

Die Strömungspfade können beispielsweise in Form mehrerer Bohrungen, Nuten und dergleichen in das Gehäuse des Ausgleichspannfutters eingebracht sein. Das Ausbilden der Strömungspfade in Form von Bohrungen im Körper des Gehäuses des Ausgleichspannfutters begünstigt eine mechanisch robuste Bauweise bei gleichzeitig geringem Bauraum.

In einer weiteren bevorzugten Ausführungsform weist der jeweilige (erste und/oder zweite) Anschluss der Schnittstelle ein Kupplungselement auf, das dazu eingerichtet ist, reversibel mit einem korrespondierenden Kupplungselement der Hydraulikfluid-Versorgung gekoppelt zu werden, vorzugsweise ein Schnellkupplungselement. Diese Kupplungselemente erlauben einen zuverlässigen und arbeitsökonomisch günstigen Koppelvorgang sowohl zum Koppeln wie auch zum Entkoppeln der HydraulikfluidVersorgung an das Ausgleichspannfutter beziehungsweise vom Ausgleichspannfutter. Das Schnellkupplungselement weist vorzugsweise eine Rückschlagklappe oder dergleichen zum Verhindern ungewollter Leckage nach dem Entkoppeln der Hydraulikfluid-Versorgung auf.

In einer weiteren bevorzugten Ausführungsform weist das Ausgleichsspannfutter ein oder mehrere Druckverstärker auf, die in dem zuspannseitigen und/oder dem aufspannseitigen hydraulischen Strömungspfad angeordnet sind. Ein Druckverstärker unterteilt den Strömungspfad jeweils in einen Niederdruckbereich und einen Hochdruckbereich, wobei der Niederdruckbereich sich vorzugsweise von der Schnittstelle bis zum Druckverstärker hin erstreckt, und der Hochdruckbereich sich vom Druckverstärker aus bis zu den Kolbenflächen hin erstreckt. Das Ausgleichspannfutter ist vorzugsweise dazu ausgelegt, im Niederdruckbereich, also stromaufwärts des Druckverstärkers, von der HydraulikfluidVersorgung mit einem Versorgungsdruck in einem Bereich von bis zu 100 bar gespeist zu werden, vorzugsweis in einem Bereich von bis zu 70 bar.

Weiter vorzugsweise ist das Ausgleichspannfutter dazu eingerichtet, im Hochdruckbereich, also stromabwärts des Druckverstärkers, die Kolbenflächen mit einem Druck von 200 bar oder mehr, vorzugsweise 270 bar oder mehr, besonders bevorzugt 350 bar oder mehr zu beaufschlagen. Die Druckverstärker, auch bezeichnet als Druckübersetzer, sind vorzugsweise dazu eingerichtet, Hydraulikfluid nur in Richtung der Hochdruckseite zu transportieren, einen Rückfluss in Richtung der Niederdruckseite aber zu verhindern. Der oder die Druckverstärker weisen vorzugsweise ein Druckübersetzungsverhältnis p_{A}/p_{I} ≥ 3,5, weiter vorzugsweise p_{A}/p_{I} ≥ 4,5, besonders bevorzugt p_{A}/p_{I} ≥ 7,0 auf, wobei p_{A} den Ausgangsdruck und p_{I} den Eingangsdruck bezeichnet.

In einer weiteren bevorzugten Ausführungsform sind ein oder mehrere gesteuerte Rückschlagorgane in dem zuspannseitigen und/oder in dem aufspannseitigen Strömungspfad angeordnet, die jeweils dazu eingerichtet sind, in einem passiven Zustand einen Rückfluss von Hydraulikfluid in Richtung der Schnittstelle zu verhindern und in einem angesteuerten Zustand einen Rückfluss von Hydraulikfluid in Richtung der Schnittstelle freizugeben. Die Rückschlagorgane sind vorzugsweise stromabwärts benachbart zu jeweils einem Druckspeicher angeordnet, oder parallel zum Druckspeicher, so dass an ihnen jeweils der gleiche Druck anliegt, mit dem auch die Kolbenflächen beaufschlagt werden.

Die Rückschlagorgane können hydraulisch, pneumatisch oder elektronisch angesteuerte Rückschlagorgane sein.

Die Rückschlagorgane weisen dazu eine entsprechende Schnittstelle auf, und das Gehäuse des Ausgleichspannfutters weist entsprechende Mittel zur Signalübertragung auf, beispielsweise Kabel, oder entsprechende hydraulische beziehungsweise pneumatische Strömungspfade.

In einer weiteren bevorzugten Ausführungsform sind im zuspannseitigen und/oder aufspannseitigen Strömungspfad ein oder mehrere Druckspeicherelemente angeordnet, vorzugsweise jeweils zwischen dem Druckverstärker und den Kolbenflächen. Die Druckspeicherelemente können beispielsweise als Membrandruckspeicher oder als Kolbendruckspeicher ausgebildet sein, und dienen dazu, Schwankungen im von der Schnittstelle zugeführten Hydraulikfluid beziehungsweise dem vom Druckverstärker ausgegebenen Fluiddruck zu puffern. Zusammen mit den Rückschlagorganen üben sie eine besonders vorteilhafte Funktion des Ausgleichspannfutters gemäß der Erfindung aus. Das Ausgleichspannfutter ist in diesen Ausführungsformen dazu eingerichtet, einen zuspannseitig oder aufspannseitig aufgebrachten, auf die Kolbenflächen wirkenden Druck nach erfolgtem Entkoppeln der Schnittstelle von der Hydraulikfluid-Versorgung zu halten. Die Funktion kann auch ohne Druckspeicherelemente realisiert werden, die Druckhaltefähigkeit wird allerdings durch die Verwendung der Druckspeicherelemente verbessert. Durch das so ausgebildete Ausgleichspannfutter wird es möglich, ein Werkstück hydraulisch im Spannfutter einzuspannen und das Spannfutter sodann von der Hydraulikfluid-Versorgung zu trennen. Damit kann das Spannfutter beispielsweise auf einer Drehmaschine verwendet werden, oder es kann von einem Werkzeugtisch auf einen anderen Werkzeugtisch umgelagert werden, um das gespante Werkstück auf einer anderen Werkzeugmaschine weiterzubearbeiten. Der Druck wird zuverlässig im Ausgleichspannfutter gehalten, so dass auch eine temporäre Lagerung des Werkstücks in gespanntem Zustand möglich ist.

In einer weiteren bevorzugten Ausführungsform sind im zuspannseitigen und/oder im aufspannseitigen Strömungspfad ein oder mehrere Drucksensoren angeordnet, die zur Erfassung des hydraulischen Drucks eingerichtet und teilweise oder vollständig in das Gehäuse integriert sind. Mittels der Drucksensoren kann beispielsweise die Druckhaltefunktion im Ausgleichspannfutter überwacht werden, oder auch die Funktionsweise des Druckverstärkers und/oder der Druckspeicherelemente ist einer Überwachung zugänglich. Genauso kann überwacht werden, ob der von der HydraulikfluidVersorgung zugeführte Druck ausreichend hoch ist, um die gewünschte Spannkraft an den Grundbacken über den zuspannseitigen oder aufspannseitigen Druck an den Kolbenflächen zu gewährleisten.

In einer weiteren bevorzugten Ausführungsform ist im zuspannseitigen Strömungspfad ein erster Drucksensor zwischen der Schnittstelle und dem Druckverstärker angeordnet, und ein zweiter Drucksensor ist zwischen Druckverstärker und Kolbenfläche angeordnet, vorzugsweise zwischen Rückschlagorgan und Kolbenfläche. Alternativ oder zusätzlich ist vorzugsweise im aufspannseitigen Strömungspfad ein erster Drucksensor zwischen Schnittstelle und Druckverstärker angeordnet, während ein zweiter Drucksensor zwischen Druckverstärker und Kolbenfläche, vorzugsweise zwischen Rückschlagorgan und Kolbenfläche, angeordnet ist. Mittels der so angeordneten Drucksensoren ist beispielsweise der Niederdruckbereich und der Hochdruckbereich des Ausgleichspannfutters zu beiden Seiten des Druckverstärkers einer Überwachung zugänglich.

In einer bevorzugten Ausführungsform weisen die Grundbacken jeweils einen Sensor zur Erfassung einer Position der Grundbacken relativ zum Gehäuse auf, wobei der Sensor vorzugsweise als berührungsloser Sensor ausgebildet ist, besonders bevorzugt als Ultraschallsensor. Die Sensoren können zur Überwachung der korrekten Funktionsweise der Anzahl Kolben benutzt werden. Alternativ oder zusätzlich können die Sensoren verwendet werden, um das Ausgleichsspannfutter hinsichtlich seiner Spannbewegung (Zuspannbewegung und/oder Aufspannbewegung) zu regeln.

In einer weiteren bevorzugten Ausführungsform stehen die Anzahl Kolben und die Grundbacken mittels einer Kulissenführung miteinander direkt in Verbindung, wobei vorzugsweise ein Kolben jeweils einen Mitnehmer aufweist, und eine korrespondierende Grundbacke jeweils eine Ausnehmung zur gleitbeweglichen Führung des Mitnehmers aufweist, sodass durch Abgleiten des Mitnehmers in der Ausnehmung die Bewegung des Kolbens in die Bewegung der jeweiligen Grundbacke umgesetzt wird. Umgekehrt können die Grundbacken jeweils einen Mitnehmer aufweisen und die Kolben weisen die korrespondierende Ausnehmung auf.

In einer weiteren bevorzugten Ausführungsform ist jeder Grundbacke ein Kolben zugeordnet, und die Anzahl Kolben weist vorzugsweise ein erstes Paar diametral gegenüberliegender Kolben und ein zweites Paar diametral gegenüberliegender Kolben auf, wobei die Kolben eines Paares jeweils derart miteinander gekoppelt sind, dass sie sich relativ zum Gehäuse stets mit gleichen Bewegungsanteilen bewegen. Es werden zwar die diametral gegenüberliegenden Kolben beim Zuspannvorgang wie auch beim Aufspannvorgang jeweils mit demselben Druck beaufschlagt, allerdings kann es aufgrund von Schwerkraft-, Reibungs- oder anderen äußeren Einflüssen dazu kommen, dass der Bewegungswiderstand minimal unterschiedlich ist. Eine zusätzliche Synchronisation über eine Kopplung diametral gegenüberliegender Kolben stellt sicher, dass die Grundbacken jeweils eines Paares, denen ja dementsprechend jeweils ein Paar Kolben zugeordnet ist, sich exakt zentrisch aufeinander zu und voneinander weg bewegen. Unter gleichen Bewegungsteilen sind identische Wegänderungen, Geschwindigkeit und Beschleunigungen zu verstehen, wobei die Bewegungsrichtung der Kolben abhängig von der kinematischen Anordnung und Ausrichtung der Betätigungsrichtung der Kolben unterschiedlich sein kann. Vorzugsweise werden die einander zugeordneten Kolben allerdings jeweils parallel bzw. gegenparallel zueinander bewegt.

In einer weiteren bevorzugten Ausführungsform weist das Ausgleichsspannfutter ein Spannzentrum mit einer Mittenachse auf, relativ zu welcher die Grundbacken radial beweglich geführt sind, wobei die Kolben eines Paares jeweils zueinander, vorzugsweise symmetrisch, um die Mittenachse beweglich in dem Gehäuse geführt sind, vorzugsweise mittels eines drehbeweglich um die Mittenachse in dem Gehäuse geführten Koppelelements.

Das Koppelelement kann beispielsweise als Koppelscheibe ausgeführt sein, sodass das jeweilige Kolbenpaar mit einer Koppelscheibe geführt wird, wobei die Koppelscheiben relativ zueinander und relativ zu dem Gehäuse drehbeweglich in dem Gehäuse geführt sind.

In einer weiteren bevorzugten Ausführungsform des Ausgleichsspannfutters mit Koppelement weisen die Kolben eines Paares jeweils zueinander verschiedene zuspannseitige Kolbenflächen, und/oder jeweils zueinander verschiedene aufspannseitige Kolbenflächen auf. Hierdurch werden die Kolben bei gleichem Betätigungsdruck mit unterschiedlichen Betätigungskräften beaufschlagt und relativ zum Koppelelement mechanisch in eine Zwangslage gebracht. Durch das Koppelelement wird unverändert die Synchronisation der Bewegungsanteile sichergestellt, und die Wiederholgenauigkeit der Relativposition der Kolben zueinander wird verbessert, weil die Kraftdifferenz das toleranzbedingte Bewegungsspiel zwischen Kolben und Koppelelement minimiert und die Kolben so stets in eine eindeutige Relativlage bringt. Die Erfindung ist vorstehend in einem ersten Aspekt unter Bezugnahme auf das Ausgleichsspannfutter selbst beschrieben worden. In einem weiteren Aspekt betrifft die Erfindung auch eine Werkzeugmaschinenanordnung, mit einer Werkzeugmaschine, insbesondere Drehmaschine, Fräsmaschine, Multitaskingmaschinen (Maschinen mit kombinierter Bearbeitungsstrategie, insb. Dreh-/Fräsmaschine, Fräs-/Drehmaschine), vorzugsweise mit einem Werkzeugtisch oder einer Maschinenspindel, insbesondere einem Wechseltisch, und einem an der Werkzeugmaschine, etwa auf dem Werkzeugtisch bzw. der Maschinenspindel, vorzugsweise reversibel lösbar, befestigten Spannfutter.

Die Erfindung löst die ihr zugrundeliegenden Aufgabe bei einer solchen Werkzeugmaschinenanordnung, indem das Spannfutter ein Ausgleichsspannfutter nach einer der vorstehend beschriebenen bevorzugten Ausführungsformen ist, und die Werkzeuganordnung eine, vorzugsweise von der Werkzeugmaschine unabhängige, Hydraulikfluid-Versorgung aufweist, die fluidleitend mit dem Ausgleichsspannfutter verbindbar und zur Steuerung des Zuspannens und/oder Aufspannens des Ausgleichsspannfutters eingerichtet ist. Die Hydraulikfluid-Versorgung kann räumlich unabhängig von der Werkzeugmaschine angeordnet sein, beispielsweise auf einem eigenen Gestell. Die Verbindung der Hydraulikfluid-Versorgung mit dem Spannfutter erfolgt vorzugsweise über Hydraulikleitungen, die mittels Schnellkupplungselementen an die Schnittstelle des Spannfutters angeschlossen werden, um den Zuspannvorgang oder Aufspannvorgang durchzuführen. Nach erfolgtem Spannvorgang können die Kupplungselemente von der Schnittstelle entfernt werden, wobei in bevorzugten Ausführungsformen der Druck im Spannfutter gehalten wird, und die Werkzeugmaschine kann das im Spannfutter gehaltene Werkstück bearbeiten, je nach Art der Werkzeugmaschine mittels unterschiedlichster Bearbeitungsverfahren. Das Spannfutter kann auch von der Maschine, also etwa vom Werkzeugtisch oder der Maschinenspindel, entfernt werden, ohne dass die Spannkraft abnimmt und ohne dass das Werkstück entnommen werden müsste. So ist auch eine Werkzeugmaschinenanordnung bevorzugt, die mehrere Werkzeugmaschinen aufweist, wobei das Spannfutter zu unterschiedlichen Bearbeitungsaufgaben mit eingespanntem Werkstück ohne Kraftverlust der Spannkraft von einer Werkzeugmaschine auf die andere Werkzeugmaschine umgelagert werden kann, um nur ein Beispiel für mögliche Anwendungsszenarien zu nennen.

Die Werkzeugmaschinenanordnung macht sich dieselben Vorteile und bevorzugten Ausführungsformen zunutze wie das Ausgleichsspannfutter der vorstehend beschriebenen bevorzugten Ausführungsformen, weswegen zur Vermeidung von Wiederholungen auf die obigen Ausführungen verwiesen wird.

Die Erfindung wird im Folgenden anhand eines bevorzugten Ausführungsbeispiels unter Bezugnahme auf die beigefügten Figuren näher erläutert. Hierbei zeigen:
- Fig. 1a, 1b: verschiedene räumliche Ansichten eines Ausgleichsspannfutters gemäß einem bevorzugten Ausführungsbeispiel,
- Fig. 2a, 2b: Detailansichten des Spannfutters gemäß den Fig. 1a und 1b,
- Fig. 3: eine teilmontierte Ansicht des Spannfutters gemäß den Fig. 1 und 2.
- Fig. 4: eine weitere teilmontierte Ansicht des Spannfutters gemäß den Fig. 1 bis 3 und
- Fig. 5: einen vereinfachten hydraulischen Fließplan für die Antriebseinheit des Spannfutters gemäß den Fig. 1 bis 4.

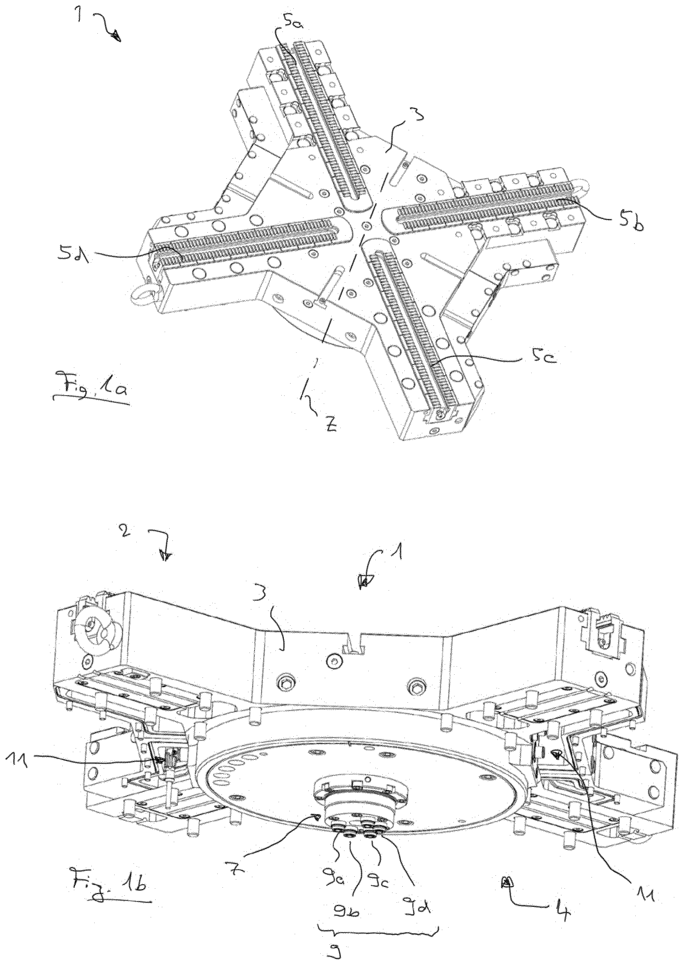

Die Fig. 1a und 1b zeigen eine Außenansicht eines Ausgleichsspannfutters 1 zum zentrischen Einspannen von Werkstücken (nachfolgend: Spannfutter). Das Spannfutter 1 weist ein Gehäuse 3 auf, in welchem insgesamt vier Grundbacken 5a, 5b, 5c und 5d radial beweglich geführt sind. Die Grundbacken 5a - 5d bewegen sich zentrisch auf eine Mittenachse Z zu und von ihr weg. Bei einem Zuspannvorgang werden die Grundbacken 5a - 5d aufeinander zubewegt, und bei einem Aufspannvorgang werden die Grundbacken 5a - 5d voneinander weg bewegt. Hierbei sind jeweils diametral einander gegenüberliegende Grundbacken 5a, 5c und 5b, 5d paarweise synchronisiert, können sich also jeweils nur mit identischen Bewegungsanteilen auf die Achse Z zubewegen oder von ihr weg bewegen. Hierdurch wird ein zentrischer Spannvorgang mit Ausgleichsfunktion realisiert.

Das Gehäuse 3 des Spannfutters 1 weist eine Oberseite 2 und eine ihr gegenüberliegende Unterseite 4 auf. An der Unterseite 4, siehe Fig. 1b, ist eine Schnittstelle 7 zum Anschluss des Spannfutters an eine Hydraulikfluid-Versorgung angeordnet. Die Schnittstelle 7 weist mehrere Anschlüsse 9 auf, die zur Versorgung des Spannfutters 1 mit Hydraulikfluid eingerichtet sind. Die Anschlüsse 9 sind vorzugsweise als Schnellkupplungsanschlüsse ausgebildet und mit entsprechenden Kupplungselementen und Hydraulikfluidleitungen reversibel lösbar verbindbar.

An dem Gehäuse 3 sind seitlich ein oder mehrere Sensoren 11 angebracht, die zur Messung des Hydraulikfluid-Drucks im Inneren des Gehäuses 3 an einer oder mehreren Stellen eingerichtet sind.

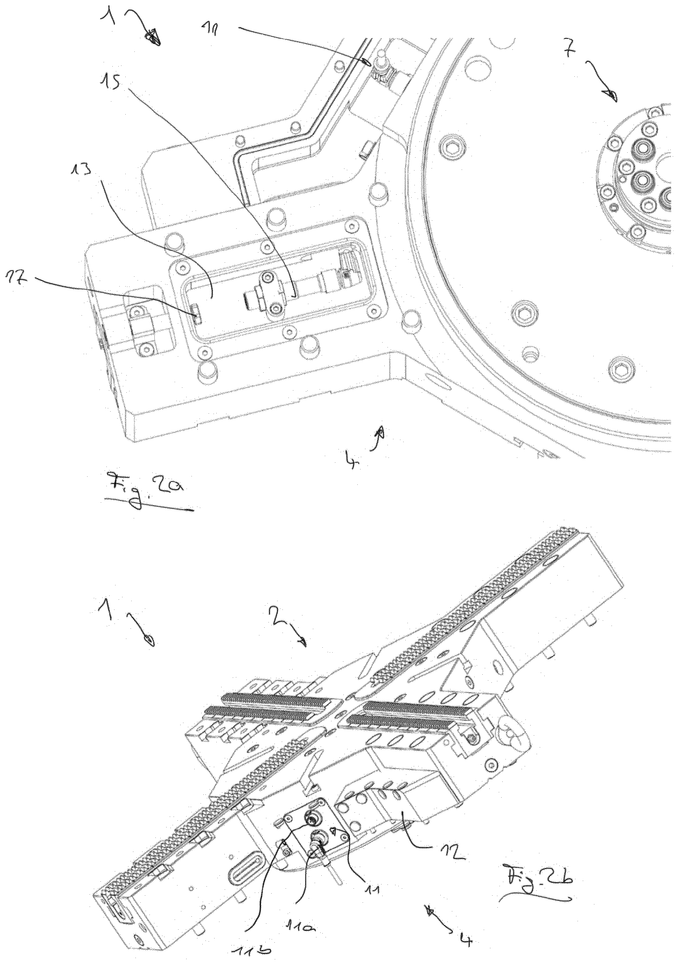

Wie Fig. 2a zeigt, weist das Spannfutter für jede der Grundbacken 5a - 5d vorzugsweise einen Grundbacken-Positionssensor 15 auf, der jeweils in einer Ausnehmung 13 unterhalb der Grundbacken 5a - 5d in das Gehäuse 3 integriert ist. Der Sensor 15 ist vorzugsweise dazu eingerichtet, die Relativbewegung zu einem Gegenpart, wie etwa einer Schraube 17, berührungslos zu überwachen.

Die Drucksensoren 11 können einfach oder mehrfach als Sensorköpfe 11a, 11b an einer Seite des Gehäuses 3 ausgeführt werden, siehe Fig. 2b, und sind vorzugsweise unter einer Verkleidung 12 abgedeckt, die in Fig. 2b teilweise ausgeblendet ist, um die Sensoranordnung besser sichtbar zu machen.

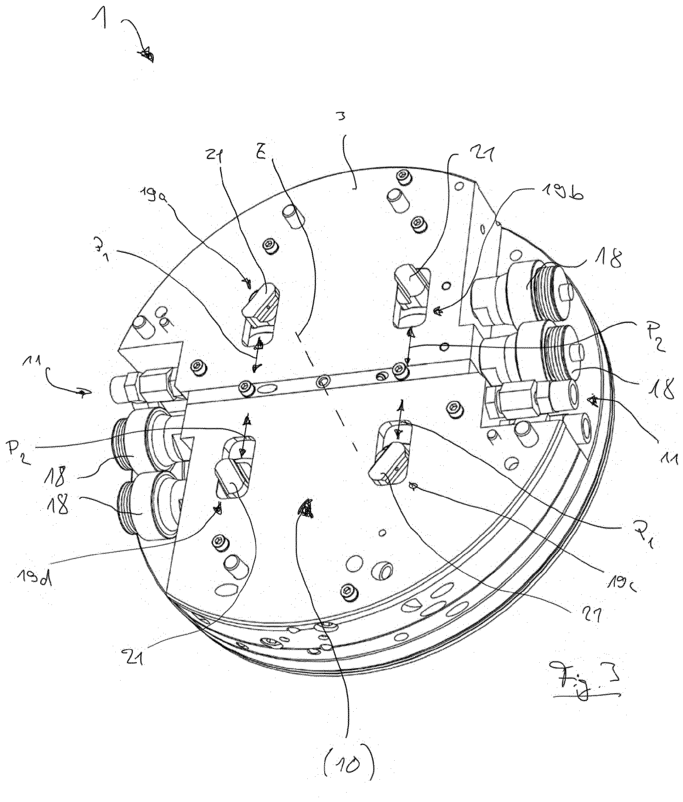

Während die Fig. 1a bis 2b in erster Linie Außenansichten des Spannfutters 1 zeigen, ist in Fig. 3 ein Oberteil des Gehäuses 3 ausgeblendet. Unterhalb des hier schon ausgeblendeten Führungskörpers für die Grundbacken befindet sich eine Antriebseinheit 10 des Spannfutters 1, die für die Bewegung der Grundbacken 5a - 5d und die Ausgleichsfunktion zuständig ist. Die Grundbacken 5a - 5d werden nach Art eines Kulissengetriebes von jeweils einem Mitnehmer 21a, 21b, 21c und 21d angetrieben, wobei die Mitnehmer 21a - 21d jeweils in korrespondierend geformten Ausnehmungen (nicht dargestellt) der Grundbacken auf deren Unterseite eingreifen und an ihnen abgleiten. Die Grundbacken 5a - 5d werden radial auf die Mittenachse Z zubewegt bzw. von ihr weg bewegt, wohingegen sich aber die Mitnehmer 21a - 21d nichtradial bewegen. Es sind aber erfindungsgemäß auch Ausführungsformen mit radial ausgerichteten Mitnehmerbewegungen möglich.

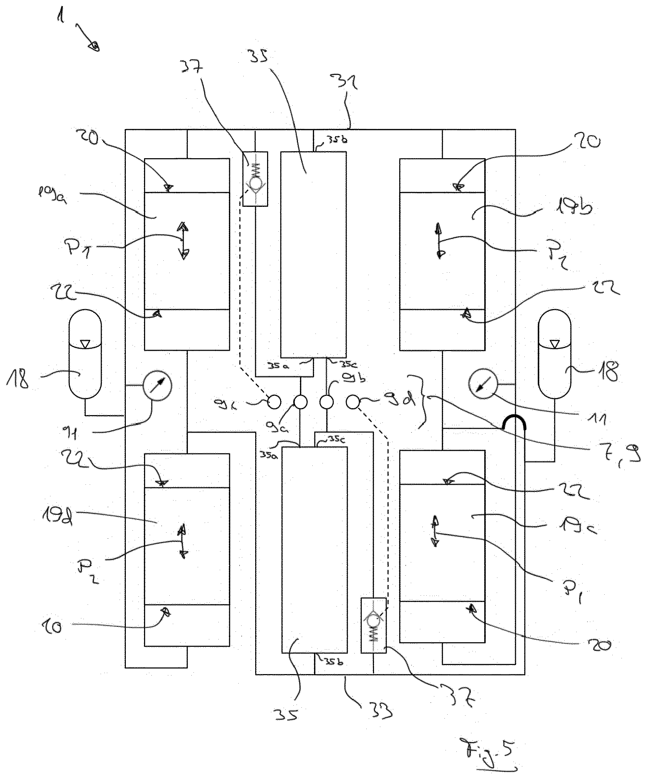

Jeder der Mitnehmer 21 ist an einem Hydraulikkolben 19a, 19b, 19c und 19d befestigt und erstreckt sich im Gehäuse 3 in Richtung der Grundbacken 5a - 5d. Die Kolben sind fluidleitend mit der Schnittstelle 7 verbunden und werden hydraulisch zum Durchführen einer Zuspannbewegung und einer Aufspannbewegung ausgelenkt. Die Kolben 19a, 19c, welche sich bezogen auf die Mittenachse Z diametral gegenüberliegen, sind mindestens fluidtechnisch, sowie vorzugsweise mechanisch, miteinander synchronisiert und bewegen sich jeweils in entgegengesetzte Richtung parallel zueinander mit gleichen Bewegungsteilen, angedeutet durch die Pfeile P₁. Ebenso sind die bezogen auf die Mittenachse Z einander diametral gegenüberliegenden Kolben 19b, 19d miteinander synchronisiert und bewegen sich jeweils entgegengesetzt in Richtung der Pfeile P₂ mit identischen Bewegungsanteilen. Siehe auch Fig. 5 für die Details zur Druckversorgung.

Das Spannfutter 1 weist in seinem Gehäuse 3 vorzugsweise ein oder mehrere Druckspeicherelemente 18 auf, die dazu eingerichtet sind, den über die Schnittstelle 7 zugeführten Fluiddruck speichern und Druckschwankungen zu kompensieren. Die Druckspeicherelemente 18 können beispielsweise als Membrandruckspeicher oder Kolbendruckspeicher ausgebildet sein. Die Bewegungsrichtung der einander diametral gegenüberliegend angeordneten Kolben 19a, 19c und 19b, 19d ist vorzugsweise jeweils gegenparallel. In der hier gezeigten Kolbenanordnung sind zudem die Kolben 19a, 19d koaxial zueinander ausgerichtet, und die Kolben 19b, 19c sind ebenfalls koaxial zueinander ausgerichtet, wohingegen aufgrund des hydraulischen Antriebskonzepts die konkrete Ausrichtung der Kolbenrichtungen sehr flexibel ist und abhängig von den Platzerfordernissen oder der gewünschten Balance zwischen maximaler Spannkraft und maximalem Spannweg auch anders als hier gezeigt ausgebildet werden kann.

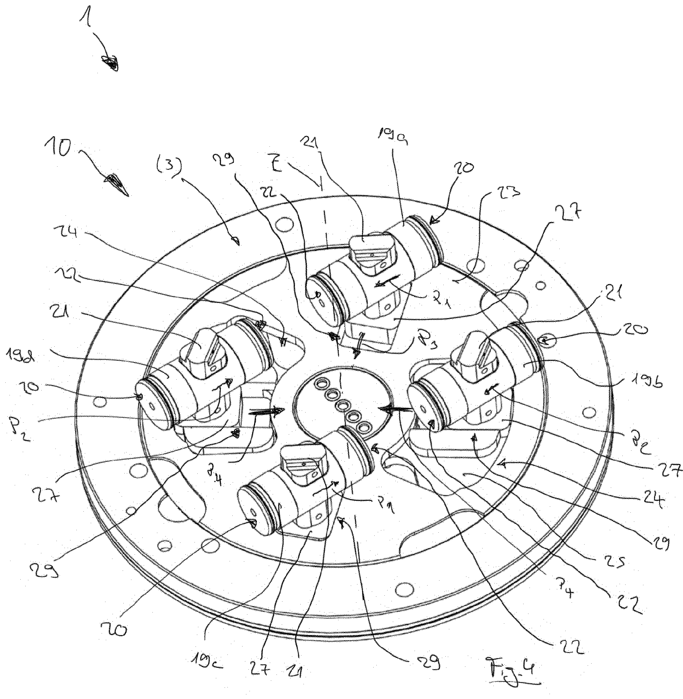

Die Kolben 19a - 19d sind Teil der hydraulischen Antriebseinheit 10, welche in Fig. 4 näher gezeigt wird. Wie der Fig. 4 zu entnehmen ist, weist jeder der Kolben 19a - 19d eine erste, zuspannseitige Kolbenfläche 20 und eine gegenüberliegend angeordnete zweite, aufspannseitige Kolbenfläche 22 auf. Die Kolben 19a - 19d sind jeweils linear beweglich angeordnet und werden infolge hydraulischer Druckbeaufschlagung der Kolbenflächen 20, 22 bewegt. Die Kolben 19a, 19c sind zum Erreichen einer zentrischen Bewegung der Grundbacken 5a, 5c miteinander über eine erste Ringscheibe 23 miteinander gekoppelt, wobei die Ringscheibe 23 um die Mittenachse Z herum drehbar im Gehäuse 3 gelagert ist. Bei einer Druckbeaufschlagung der zuspannseitigen Kolbenflächen 20 werden die Kolben 19a, 19c in Richtung des Pfeils P₁ ausgelenkt und erzwingen so eine Rotationsbewegung der ersten Ringscheibe 23 um die Mittenachse Z herum. Der dadurch geringer werdende Abstand der Kolben 19a, 19c von der Mittenachse Z stellt hierbei kein Hindernis dar, denn die Kolben 19a, 19b, 19c, 19d sind jeweils mit einem Kulissenstein 27 bezogen auf die Mittenachse Z radial gleitend in korrespondierenden Ausnehmungen 29 geführt, sodass die Kolben 19a, 19c bei einer Zuspannbewegung, also Druckbeaufschlagung der zuspannseitigen Kolbenflächen 20, durch eine Gleitbewegung in Richtung der Pfeile P₃ relativ zu der ersten Ringscheibe 23 ausweichen können, bzw. die durch ihre Kolbenkammern vorgegebene Gleitbewegung störungsfrei ausführen können.

Unterhalb der ersten Ringscheibe 23 ist eine zweite Ringscheibe 25 angeordnet. Die Kolben 19b, 19d des zweiten Kolbenpaars, die den Grundbacken 5b, 5d zugeordnet sind, sind relativ zueinander symmetrisch zu der Mittenachse Z mit der zweiten Ringscheibe 25 gekoppelt und sitzen mit ihren Kulissensteinen 27 ebenso in einer entsprechenden Ausnehmung 29 in der zweiten Ringscheibe 25. Die erste Ringscheibe 23 weist für die Durchführung der Kulissensteine 27 in die zweite Ringscheibe 25 entsprechende Ausnehmungen 24 auf.

Die beiden Ringscheiben 23, 25 können sich unabhängig voneinander drehbar um die Mittenachse Z herum bewegen. Hierdurch wird eine konstruktiv vorteilhafte und einfach umzusetzende hydraulische Versorgung der Kolben 19a - 19d möglich: Die paarweise Synchronisierung der Kolben 19a, 19c und 19b, 19d über die Ringscheiben 23, 25 macht es möglich, alle zuspannseitigen Kolbenflächen 20 mit ein und demselben Strömungspfad mit Hydraulikfluid für den Zuspannvorgang zu versorgen und analog dazu auch die aufspannseitigen Kolbenflächen 22 alle über denselben Strömungspfad miteinander mit Hydraulikfluid zu versorgen. Soll ein Spannvorgang durchgeführt werden, muss lediglich der hierfür notwendige Druck in den jeweiligen Strömungspfad eingegeben werden, und es bewegen sich zunächst alle Kolben 19a, 19b, 19c, 19d in Richtung der Pfeile P₁, P₂. Sobald ein erstes Kolbenpaar 19a, 19c (z. B.) durch Anliegen der den Grundbacken 5a, 5c zugeordneten Spannbacken (nicht dargestellt) an einem Werkstück nicht mehr weiterbewegt werden kann, verharren diese Kolben 19a, 19c in ihrer dann mittels des Werkstücks fest vorgegebenen Position, während sich die beiden weiteren Kolben 19b, 19d, und mit ihnen die zweite Ringscheibe 25, infolge des weiter anliegenden hydraulischen Drucks so lange weiter bewegen, bis auch die beiden übrigen, den Grundbacken 5b, 5d zugeordneten Spannbacken am Werkstück anliegen. Der auf die Kolbenflächen 20 bzw. 22 wirkende Druck bleibt derselbe, sodass das Werkstück homogen von allen Backenpaaren eingespannt wird. Zuspannvorgang und Aufspannvorgang funktionieren grundsätzlich in derselben Art und Weise.

Fig. 5 zeigt ein bevorzugtes exemplarisches Systemlauout für einen integrierten hydraulischen Antrieb der Antriebseinheit 10. So weist die Antriebseinheit 10 einen zuspannseitigen Strömungspfad 31 und einen aufspannseitigen Strömungspfad 33 auf. In beiden Strömungspfaden 31, 33 ist vorzugsweise jeweils ein Druckverstärker 35 angeordnet. Der Druckverstärker 35 ist an seiner stromaufwärtigen Seite mit einem ersten Hydraulikfluidanschluss 9a der Schnittstelle 7 verbunden und dazu eingerichtet, den ihm zugeführten hydraulischen Fluiddruck um einen vorbestimmten Faktor zu verstärken.

Der aufspannseitige Strömungspfad weist ebenfalls einen Druckverstärker 35 auf, der einlassseitig mit einem zweiten Anschluss 9b der Schnittstelle 7 verbunden ist.

Soll also ein Zuspannvorgang oder ein Aufspannvorgang durchgeführt werden, wird über die Anschlüsse 9a, 9b Hydraulikfluid mit einem vorbestimmten Druck zugeführt, von den Druckverstärkern 35 verstärkt, und auf der stromabwärtigen Seite der Druckverstärker 35 dann den jeweiligen zuspannseitigen Kolbenflächen 20 oder den aufspannseitigen Kolbenflächen 22 zugeführt. Die zuspannseitigen Kolbenflächen 20 stehen alle fluidleitend miteinander in Verbindung, genauso wie die aufspannseitigen Kolbenflächen 22 miteinander fluidleitend in Verbindung stehen, damit alle Kolbenflächen stets mit demselben, von den Druckverstärkern 35 verstärkten Druck beaufschlagt werden können.

Der Druckverstärker 35 ist zum Übertragen von Hydraulikfluid von einem Einlass 35a, von der Schnittstelle 7 kommend, zu einem Betriebsdruckauslass 35b in Richtung der jeweiligen Kolbenflächen 20, 22 eingerichtet. Zusätzlich weist der Druckverstärker einen Steuerdruckanschluss 35c auf. Der Steuerdruckanschluss 35c des zuspannseitigen Druckverstärkers 35 ist mit dem Einlass 35a des aufspannseitigen Druckverstärkers 35 fluidleitend verbunden, und der Steuerdruckanschluss 35c des aufspannseitigen Druckverstärkers 35 ist mit dem Einlass des zuspannseitigen Druckverstärkers 35 verbunden. Die Druckverstärker 35 sind dazu ausgebildet, bei anliegendem Steuerdruck an dem Steuerdruckanschluss 35c eine Rückströmung von Hydraulikfluid entgegen der Haupt-Strömungsrichtung, also vom Betriebsdruckauslass 35b in Richtung des Einlasses 35a, zuzulassen, und in Abwesenheit eines Steuerdrucks am Steuerdruckanschluss 35c zu verhindern. Durch die beschriebene Kreuzverbindung wird damit immer dann, wenn einer der Druckverstärker mit Druck beaufschlagt wird, der jeweils andere Druckverstärker zum Rückfluss von Hydraulikfluid geöffnet, um so den Gegendruck bzw. Fluidwiderstand auf derjenigen Kolbenfläche, die nicht angesteuert werden soll, beim Spannen zu senken. Bei einem Zuspannvorgang wird auf diese Weise die aufspannseitige Kolbenfläche druckentlastet und umgekehrt.

Wenn ein Spannvorgang erfolgen soll, kann so eine Entlastung der jeweils nicht gewünschten Kolbenfläche erfolgen, damit das Spannfutter 1 nicht jeweils gegen einen (recht hohen) Fluiddruck anarbeiten muss.

Um diesen Prozess noch zu unterstützen, und das an der aufspannseitigen Kolbenfläche 22 anstehende Hydraulikfluid aus der Kolbenkammer ablassen zu können, weist der aufspannseitige Strömungspfad 33 und der zuspannseitige Strömungspfad 31 jeweils vorzugsweise zusätzlich ein Rückschlagorgan 37 auf, das auf der Hochdruckseite, also stromabwärts vom jeweiligen Druckverstärker 35, im Strömungspfad 31, 33 angeordnet ist und dazu eingerichtet ist, in einem passiven Zustand den Rückstrom von Hydraulikfluid in Richtung der Schnittstelle 7 zu unterbinden. Das Rückschlagorgan 37 ist allerdings jeweils ansteuerbar, im vorliegenden Ausführungsbeispiel fluidisch. Das Rückschlagorgan 37 im zuspannseitigen Strömungspfad 31 ist über eine dritte Schnittstelle 9c ansteuerbar, beispielsweise eine pneumatische oder hydraulische Schnittstelle. Alternativ wäre auch eine elektrische Ansteuerung natürlich möglich. Im aufspannseitigen Strömungspfad 33 ist das Rückschlagorgan 37 über einen vierten (pneumatischen, hydraulischen oder elektrischen) Anschluss 9d ansteuerbar. Im angesteuerten Zustand gibt das Rückschlagorgan 37 einen Rückfluss von hydraulischem Fluid in Richtung des jeweiligen Anschlusses 9a, 9b der Schnittstelle 7 frei. Um also einen Zuspannvorgang auszuführen, muss das Rückschlagorgan 37 im aufspannseitigen Strömungspfad 33 angesteuert werden und für einen Aufspannvorgang muss das Rückschlagorgan 37 im zuspannseitigen Strömungspfad 31 angesteuert werden.

In den Strömungspfaden 31, 33 sind, wie in den obigen Figuren bereits gezeigt, vorzugsweise ein oder mehrere Drucksensoren 11 vorgesehen, die beispielsweise seitlich aus dem Gehäuse ausgeführt werden können. Es hat sich als vorteilhaft herausgestellt, jedenfalls die Hochdruckseite der Strömungspfade 31, 33 zu überwachen, um auf die ordnungsgemäße Funktionsweise des Spannfutters 1 achten zu können.

Weiter vorzugsweise sind auf der Hochdruckseite der Strömungspfade 31, 33 ein oder mehrere der Druckspeicherelemente 18 angeordnet, um Druckschwankungen kompensieren zu können.

Die Kombination der Druckspeicherelemente 18 und der Rückschlagorgane 37 ermöglicht zudem eine besonders hervorzuhebende Funktionalität des Spannfutters 1 gemäß der Erfindung:
Nach dem Durchführen eines Zuspannvorgangs oder Aufspannvorgangs mit einem gewünschten hydraulischen Druck kann, sobald der Spannvorgang abgeschlossen ist, die Hydraulikfluidversorgung von der Schnittstelle 7 entfernt werden. Durch die Rückschlagorgane 37 wird ein Rückfluss von mit hohem Druck beaufschlagtem Hydraulikfluid in Richtung der Schnittstelle 7 verhindert. Die zusätzliche Integration der Druckspeicherelemente 18 stellt zudem sicher, dass es hierbei nicht zu einem Druckabfall bis zum vollständigen Verschließen kommt.

Dadurch wird es möglich, das Spannfutter 1 sehr flexibel einzusetzen, nämlich sowohl an Drehmaschinen, wie auch an Fräsmaschinen oder Multitaskingmaschinen (d.h. Dreh-/Fräsmaschinen oder an Fräs-Drehmaschinen). Ebenso ist ein Wechsel des Spannfutters mit gespanntem Werkstück von der Werkzeugmaschine, etwa von einem Werkzeugtisch, zu einer anderen Maschine, also etwa einem anderen Werkzeugtisch, oder von einer Maschinenspindel zur nächsten Maschinenspindel etc. möglich, ohne einen Spannkraftverlust in Kauf nehmen zu müssen.

## Patentansprüche

1. Ausgleichsspannfutter (1) zum zentrischen Einspannen von Werkstücken, mit
- einem Gehäuse (3),
- zwei Paaren von einander diametral gegenüberliegenden, in dem Gehäuse (3) geführten Grundbacken (5a,5c; 5b,5d), und
- einer in das Gehäuse (3) integrierten Antriebseinheit (10), die zum zentrischen Spannen der Grundbacken (5a,5c; 5b,5d) eingerichtet ist,
**dadurch gekennzeichnet, dass** die Antriebseinheit (10) dazu eingerichtet ist, die Grundbacken (5a,5c; 5b,5d) hydraulisch zu betätigen.

2. Ausgleichsspannfutter (1) nach Anspruch 1,
wobei die Antriebseinheit (10) eine Anzahl hydraulisch betätigter Kolben (19a, 19c; 19b, 19d) aufweist, die mit den Grundbacken (5a,5c; 5b,5d) wirkverbunden sind, und wobei die Antriebseinheit (10) dazu eingerichtet ist, die Anzahl Kolben (19a, 19c; 19b, 19d) mittels Druckbeaufschlagung zu betätigen, und die Kolbenbewegung in eine ausgleichende, zentrische Bewegung der Grundbacken-Paare umzusetzen.

3. Ausgleichsspannfutter (1) nach Anspruch 1 oder 2,
wobei die Kolben (19a, 19c; 19b, 19d) jeweils eine zuspannseitige, hydraulisch mit Druck beaufschlagbare Kolbenfläche (20) aufweisen, und wobei die zuspannseitigen Kolbenflächen (20) aller Kolben (19a, 19c; 19b, 19d) fluidleitend miteinander verbunden sind.

4. Ausgleichsspannfutter (1) nach einem der vorstehenden Ansprüche,
wobei die Kolben (19a, 19c; 19b, 19d) jeweils eine aufspannseitige, hydraulisch mit Druck beaufschlagbare Kolbenfläche (22) aufweisen, und wobei die aufspannseitigen Kolbenflächen (22) aller Kolben (19a, 19c; 19b, 19d) fluidleitend miteinander verbunden sind.

5. Ausgleichsspannfutter (1) nach einem der vorstehenden Ansprüche,
wobei die Antriebseinheit (10) eine hydraulische Schnittstelle (7) zum Koppeln der Antriebseinheit (10) mit einer Hydraulikfluid-Versorgung aufweist, und wobei die Schnittstelle (7) vorzugsweise einen ersten Anschluss (9a) aufweist, von dem aus sich ein zuspannseitiger hydraulischer Strömungspfad (31) bis zu den zuspannseitigen Kolbenflächen (20) erstreckt, und weiter vorzugsweise einen zweiten Anschluss (9b) , von dem aus sich ein aufspannseitiger hydraulischer Strömungspfad (33) bis zu den aufspannseitigen Kolbenflächen (22) erstreckt.

6. Ausgleichsspannfutter (1) nach Anspruch 5,
wobei ein oder mehrere Druckverstärker (35) in dem zuspannseitigen und/oder dem aufspannseitigen hydraulischen Strömungspfad (31, 33) angeordnet sind.

7. Ausgleichsspannfutter (1) nach Anspruch 5 oder 6,
wobei ein oder mehrere gesteuerte Rückschlagorgane (37) in dem zuspannseitigen und/oder aufspannseitigen Strömungspfad (31, 33) angeordnet sind, die jeweils dazu eingerichtet sind, in einem passiven Zustand einen Rückfluss von Hydraulikfluid in Richtung der Schnittstelle (7) zu verhindern, und einem angesteuerten Zustand dazu eingerichtet sind, einen Rückfluss von Hydraulikfluid in Richtung der Schnittstelle (7) freizugeben.

8. Ausgleichsspannfutter (1) nach einem der Ansprüche 5 bis 7,
wobei im zuspannseitigen und/oder aufspannseitigen Strömungspfad (31, 33) ein oder mehrere Druckspeicherelemente (18) angeordnet sind, vorzugsweise jeweils zwischen Druckverstärker (35) und Kolbenfläche (20, 22).

9. Ausgleichsspannfutter (1) nach einem der Ansprüche 5 bis 8,
wobei im zuspannseitigen und/oder aufspannseitigen Strömungspfad (31, 33) ein oder mehrere Drucksensoren (11) angeordnet sind, die zur Erfassung des hydraulischen Drucks eingerichtet und teilweise oder vollständig in das Gehäuse (3) integriert sind.

10. Ausgleichsspannfutter (1) nach einem der vorstehenden Ansprüche,
wobei die Grundbacken (5a,5c; 5b,5d) jeweils einen Sensor (15) zur Erfassung einer Position der Grundbacke relativ zum Gehäuse (3) aufweisen, wobei der Sensor (15) vorzugsweise als Ultraschallsensor ausgebildet ist.

11. Ausgleichsspannfutter (1) nach einem der vorstehenden Ansprüche,
wobei die Anzahl Kolben (19a, 19c; 19b, 19d) und die Grundbacken (5a,5c; 5b,5d) mittels einer Kulissenführung miteinander direkt in Verbindung stehen, wobei vorzugsweise ein Kolben (19a, 19c; 19b, 19d) jeweils einen Mitnehmer (21) aufweist, und die Grundbacken (5a,5c; 5b,5d) jeweils eine Ausnahme zur gleitbeweglichen Führung des Mitnehmers (21) aufweisen, so dass durch Abgleiten des Mitnehmers (21) in der Ausnehmung die Bewegung des Kolbens (19a-d) in die Bewegung der jeweiligen Grundbacke (5 a-d) umgesetzt wird.

12. Ausgleichsspannfutter (1) nach einem der vorstehenden Ansprüche,
wobei jeder Grundbacke (5a, 5c; 5b, 5d) ein Kolben (19a, 19c; 19b, 19d) zugeordnet ist, und die Anzahl Kolben (19a, 19c; 19b, 19d) vorzugsweise ein erstes Paar diametral gegenüberliegender Kolben (19a, 19c) und ein zweites Paar diametral gegenüberliegender Kolben (19b, 19d) aufweist, wobei die Kolben (19a, 19c; 19b, 19d) eines Paares jeweils derart miteinander gekoppelt sind, dass sie sich relativ zum Gehäuse (3) stets mit gleichen Bewegungsanteilen bewegen.

13. Ausgleichsspannfutter (1) nach Anspruch 12,
wobei das Ausgleichsspannfutter (1) ein Spannzentrum mit einer Mittenachse (Z) aufweist, relativ zu welcher die Grundbacken (5a,5c; 5b,5d) radial beweglich geführt sind, und wobei die Kolben (19a, 19c; 19b, 19d) eines Paares jeweils zueinander, vorzugsweise symmetrisch um die Mittenachse (Z), beweglich in dem Gehäuse (3) geführt sind, vorzugsweise mittels eines drehbeweglich um die Mittenachse in dem Gehäuse (3) geführten Koppelelements (23, 25),
wobei vorzugsweise die Kolben eines Paares jeweils zueinander verschieden große zuspannseitige Kolbenflächen, und/oder jeweils zueinander verschieden große aufspannseitige Kolbenflächen aufweisen.

14. Ausgleichsspannfutter (1) nach Anspruch 13,
wobei das erste Kolbenpaar (19a, 19c) mit einer ersten Koppelscheibe (23) geführt wird, und das zweite Kolbenpaar (19b, 19d) mit einer zweiten Koppelscheibe (25) geführt wird, wobei die beiden Koppelscheiben (23, 25) relativ zueinander und relativ zu dem Gehäuse (3) drehbeweglich in dem Gehäuse (3) geführt sind.

15. Werkzeugmaschinenanordnung, mit
- einer Werkzeugmaschine und
- einem an der Werkzeugmaschine, vorzugsweise reversibel lösbar, befestigten Spannfutter (1),
**dadurch gekennzeichnet, dass** das Spannfutter (1) ein Ausgleichspannfutter nach ein einem der vorstehenden Ansprüche ist, und
die Werkzeuganordnung eine, vorzugsweise von der Werkzeugmaschine unabhängige, Hydraulikfluid-Versorgung aufweist, die fluidleitend mit dem Ausgleichsspannfutter (1) verbindbar und zur Steuerung des Zuspannens und/oder Aufspannens des Ausgleichsspannfutters (1) eingerichtet ist.
